# EUROPEAN PATENT SPECIFICATION

(11) **EP 3 342 816 B1**
(45) Date of publication and mention of the grant of the patent: **09.10.2019**
(21) Application number: 17180894.2
(22) Date of filing: 12.07.2017
(51) Int. Cl.: C08L 23/12, C08L 23/14, H01B 3/44, H01B 3/28

(54) **POWER CABLE COMPRISING A POLYPROPYLENE RESIN IN AN INSULATION LAYER**
STROMKABEL MIT EINEM POLYPROPYLENHARZ IN DER ISOLATIONSSCHICHT
CÂBLE ÉLECTRIQUE COMPRENANT UNE RÉSINE DE POLYPROPYLÈNE DANS UNE COUCHE D'ISOLATION

(30) Priority: 27.12.2016 KR 20160180197
(43) Date of publication of application: 04.07.2018
(73) Proprietor: Hanwha Total Petrochemical Co., Ltd., Seosan-si, Chungcheongnam-do 31900 (KR)
(72) Inventor: KIM, Bong Seock, 31900 Chungcheongnam-do (KR); CHUN, Yong Sung, 31900 Chungcheongnam-do (KR)
(74) Representative: Bachinger-Fuchs, Eva-Maria

(56) References cited:
- EP-A1- 1 619 217
- WO-A1-2017/009193
- US-A1- 2014 309 359

## Description

### BACKGROUND

### 1. Field

The present invention relates to a polypropylene resin suitable for a power cable and a power cable comprising the polypropylene resin in an insulation layer. More particularly, the present invention relates to non-crosslinked polypropylene having an excellent mechanical characteristic and a recycling property to exhibit superior flexibility and electrical properties, which are offered to the power cable including an insulating layer.

### 2. Description of the Related Art

In an insulating layer of a general cable, polyethylene or ethylene-propylene rubber (EPR) copolymer, or ethylene-propylene-dien modified (EPDM) rubber copolymer is crosslinked and used so as to maintain mechanical, electrical properties at a high temperature of 90 to 110°C, which is an operating temperature of a high-voltage cable.

However, an inferior product or a product that is almost used up, which is made from a crosslinked polymer, such as crosslinked polyethylene (XLPE), is not recyclable and has no option but to be incinerated, which is not eco-friendly. Non-crosslinked high density polyethylene (HDPE), linear low density polyethylene (LLDPE) or low density polyethylene (LDPE) is recyclable but is poor in heat resistance, so that it may be modified at high temperatures to then be melted. Therefore, even a non- crosslinked polymer cannot be used for a high-voltage cable operating at high temperatures.

In recent years, research into non-crosslinked, recyclable polypropylene, which has higher heat resistance than polyethylene because of its melting temperature of 130°C or greater to increase the operating temperature of a power cable to 110°C, has been extensively conducted. Korean patent publication No. 10-2014-0053204 describes a power cable using a polypropylene resin with an organic nucleating agent added thereto in an insulating layer for the purpose of reducing crystal sizes. However, in order to solve the problem of poor flexibility of polypropylene due to its high rigidity, as described in the proposed document, since rubber is additionally kneaded, physical properties may be locally deteriorated due to non-uniform dispersion. Meanwhile, for the purpose of reducing crystal sizes, adding an organic nucleating agent may cause an increase in the cost and drawbacks due to the increased cost. Accordingly, in order to enable propylene to be used in an insulating layer of a power cable, solutions to the aforementioned problems would be required.

US 2014/0309359 describes i.a. polymer blends comprising a continuous and a dispersed phase. The continuous phase of said polymer blend comprises a polypropylene that is semi-crystalline. The dispersed phase comprises particles of an elastomeric copolymer different from the polypropylene dispersed in said continuous phase, wherein the elastomeric copolymer has a crystallinity less than that of the polypropylene and is at least partially cross-linked.

### SUMMARY

To solve the problems, the present invention provides a power cable comprising a polypropylene resin in an insulating layer, which resin has superb mechanical and electrical properties to be suitably used for a power cable as an ethylene-polypropylene block copolymer.

The power cable has an improved breakdown characteristic while exhibiting superb mechanical and electrical properties

The polypropylene resin has superb flexibility and electrical properties to be suitably used in an insulating of the power cable and is not crosslinked to be recycle and eco-friendly.

As described above, since the polypropylene resin according to the present invention has excellent flexibility and a fine and uniform rubber disperse phase to exhibit superb mechanical and electrical properties, a power cable having an improved breakdown characteristic can be provided when it is used in an insulating layer of the power cable.

### BRIEF DESCRIPTION OF DRAWINGS

FIG. 1 illustrates the size of a dispersed phase of an ethylene-propylene rubber copolymer included in a polypropylene resin prepared in Example 2, as measured using a scanning electron microscope (SEM); and
FIG. 2 illustrates the size of a dispersed phase of an ethylene-propylene rubber copolymer included in a polypropylene resin prepared in Comparative Example 3, as measured using a scanning electron microscope (SEM).

### DETAILED DESCRIPTION

Hereinafter, the present invention will be described in detail.

The polypropylene resin in an insulating layer of a power cable according to the present invention is an ethylene-propylene block copolymer prepared by polymerization, for example stepwise polymerization of (a) propylene homopolymer or ethylene-propylene random copolymer, and (b) ethylene-propylene rubber copolymer in a reactor. A difference (Tm-Tc) between a melting temperature (Tm) of the ethylene-propylene block copolymer and a crystallization temperature (Tc) of the ethylene-propylene block copolymer is 45 °C or less and the size of the rubber copolymer in a dispersed phase is 0.5 µm or less, and the ethylene-propylene rubber copolymer (b) is contained in an amount of 30∼50 wt% based on the total weight of the ethylene-propylene block copolymer.

If the difference (Tm-Tc) between the melting temperature (Tm) and the crystallization temperature (Tc) is greater than 45°C, when a molten resin is cooled and crystallized for product formation, sizes of spherulite are increased due to a small number of nuclei produced and delayed crystal growth, thereby degrading electrical properties of the polypropylene resin. In addition, if the size of the rubber copolymer is greater than 0.5 µm, an interface between the component (a) and the component (b) is reduced, thereby undesirably lowering an insulating property. The ethylene-propylene rubber copolymer is preferably finely and uniformly dispersed.

The melting temperature (Tm) of the ethylene-propylene block copolymer is in the range of between 145°C and 165°C. If the melting temperature (Tm) of the ethylene-propylene block copolymer is lower than 145°C, the heat resistance of the ethylene-propylene block copolymer is not sufficiently high, thereby making the ethylene-propylene block copolymer unsuitable to be used for a high-voltage power cable operating at high temperatures.

In one embodiment of the present invention, ethylene is preferably contained in the ethylene-propylene random copolymer in an amount of 2 wt% or less. If the amount of ethylene contained in the ethylene-propylene random copolymer is greater than 2 wt%, the melting temperature (Tm) of the ethylene-propylene random copolymer is excessively lowered to less than 145°C, so that the heat resistance of the ethylene-propylene block copolymer is not sufficiently high.

In the polypropylene resin according to the present invention, the propylene homopolymer or ethylene-propylene random copolymer (a) is contained in an amount of 50-70 wt% based on the total weight of the ethylene-propylene block copolymer. If the amount of the component (a) is less than 50 wt%, the heat resistance is not sufficiently high. If the amount of the component (a) is greater than 70 wt%, the crystallinity may increase and the flexibility is undesirably lowered.

In the polypropylene resin according to the present invention, ethylene is contained in the ethylene-propylene rubber copolymer (b) in an amount of 20 to 40 wt%. If the amount of ethylene contained in the component (b) is less than 20 wt%, polymerization is performed predominantly on the random copolymer, rather than on the amorphous rubber copolymerization, to reduce the resilience of rubber, thereby lowering impact strength. If the amount of ethylene contained in the component (b) is greater than 40 wt%, compatibility of the component (a) and the component (b) is lowered, the size of the rubber dispersed phase may become increased, thereby deteriorating dispersability. Specifically, if the size of the rubber dispersed phase is greater than 0.5 µm, the interface between the component (a) and the component (b) is reduced, thereby undesirably lowering an insulating property.

In the polypropylene resin according to the present invention, the ethylene-propylene rubber copolymer (b) is preferably contained in the ethylene-propylene block copolymer in an amount of 30 to 50 wt%.

According to the present invention, a power cable is provided, the power cable including the polypropylene resin according to the present invention in an insulating layer.

Particularly, the power cable according to the present invention may be a low voltage (LV), medium voltage (MV), high voltage (HV) or extra high voltage (EHV) power cable. Specifically, the power cable according to the present invention is preferably a low voltage (LV), medium voltage (MV) or high voltage (HV) power cable. An alternating current (AC) voltage, a direct current (DC) voltage or an over voltage (impulse) may be applied to the power cable. In an example embodiment, the power cable is an AC power cable.

According to the present invention, the low voltage (LV) refers to a voltage of 1 kV or less, the medium voltage (MV) refers to a voltage of greater than 1 kV and not greater than 40 kV, and the high voltage (HV) refers to a voltage of greater than 40 kV, preferably greater than 50 kV. The extra high voltage (EHV) preferably refers to a voltage of 230 kV or greater. Therefore, the high voltage (HV) is generally in the range greater than 40 and less than 230 kV, for example, in the range of 50 kV and less than 230 kV, while the extra high voltage (EHV) is 230 kV or greater and the upper limit of the extra high voltage (EHV) is not an important factor. Therefore, the extra high voltage (EHV) should be greater than or equal to 230 kV and may be less than or equal to 900 kV or higher than 900 kV.

The polypropylene resin according to the present invention is very advantageously used for an AC power cable, particularly, a low voltage (LV), medium voltage (MV) or high voltage (HV) AC power cable.

More preferably, the power cable includes a conductor enclosed by an internal semiconducting layer, an insulating layer and an outer semiconducting layer in that order. Here, the polypropylene resin according to the present invention is included in at least one insulating layer.

According to an embodiment of the present invention, the insulating layer of the present invention may include a polypropylene resin and additional components generally known in the polymer related art, including, for example, polymeric component(s) and/or additive(s), preferably including additive(s), such as arbitrary antioxidant(s), scorch retardant(s), crosslinkage booster(s), stabilizer(s), processing adjuvant(s), flame retardant additive(s), water tree retardant additive(s), acid or ion scavenger(s), inorganic filler(s) and voltage stabilizer(s). In addition, the insulating layer of the present invention preferably includes additive(s) generally used for a wire or cable incorporating product, for example, one or more antioxidant(s). The additive(s) are used in conventionally accepted amount(s), as widely known to one skilled in the related art.

The polypropylene resin according to the present invention may be included in an amount of 50 to 100 wt% based on a total weight of the polymeric components included in the insulating layer.

The insulating layer may be a layer formed by melting and mixing the polymers included in the insulating layer.

The present invention will be understood in more detail with reference to examples and comparative examples and the following examples and comparative examples are provided only for illustrating the present invention, not for limiting the protection scope of the present invention.

### Examples 1-3 and Comparative Examples 1-5

Ethylene-propylene block copolymers of Examples and Comparatives were prepared by a Mitsui's Hypol process for continuously performing polymerization using two bulk reactor sets and two gas phase reactor sets connected in series. A Ziegler-Natta catalyst having as a phthalate-based internal electron donor was used as a catalyst, triethylaluminum was used as a promoter and dicyclopentyldimethoxysilane was used as a cocatalyst. The operating temperatures and pressures of the first- and second-stage bulk reactors were 68 to 75°C and 30 to 40 kg/cm² and 68 to 75°C and 25 to 35 kg/cm², respectively. The operating temperatures and pressures of the third- and fourth-stage gas phase reactors were 75 to 82°C and 15 to 20 kg/cm² and 68 to 75°C and 10 to 17 kg/cm², respectively. In the first-, second- and third-stage reactors, propylene alone was injected to prepare propylene homopolymer or ethylene was additionally injected to prepare ethylene-propylene random copolymer. In case of polymerization of ethylene-propylene random copolymer, the same amount of ethylene was copolymerized in each reactor, and ethylene to propylene ratio was adjusted to allow for copolymerization of ethylene with the compositions listed in Table 1. In the fourth-stage reactor continuously connected to the first- to third-stage reactors, ethylene and propylene were injected to polymerize ethylene-propylene rubber, thereby finally obtaining ethylene-propylene block copolymer. The melt index was controlled by adding hydrogen to each reactor. Ethylene-propylene block copolymer including blends of components (a) and (b) were polymerized using the aforementioned method by adjusting compositions and polymerization ratios of the components (a) and (b) according to the structures listed in Table 1.

Various physical properties of the obtained polypropylene resin in Examples and Comparative Examples were evaluated in the following methods and standards.

### (1) Melt Index

The melt index was measured in accordance with ASTM D 1238 at 230° C and at 2.16 kg load.

### (2) Dispersed Phase Size

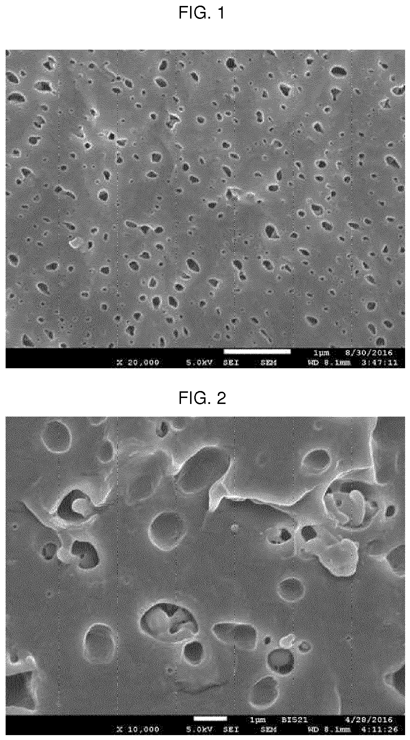

An injected specimen was fractured under a liquid nitrogen atmosphere and rubber dispersed phases were extracted with xylene. Then, sizes of rubber dispersed phases were measured by scanning electron microscope (SEM). The results are shown in FIGS. 1 and 2.

### (3) Thermal Behaviors

The sample was isothermally maintained at 200°C for 10 minutes using differential scanning calorimetry (DSC) to then remove a thermal history and the crystallization temperature (Tc) was obtained while cooling by 10°C per minute starting from 200°C to reach 30°C. Next, after isothermal maintenance at 30°C for 10 minutes, the melting temperature (Tm) was obtained from a peak melting temperature while raising the temperature again by 10°C per minute.

### (4) Flexural Modulus (FM)

The flexural modulus (FM) was measured according to the ASTM D 790.

### (5) Izod Impact Strength

The Izod impact strength was measured at room temperature and low temperature (-20°C) according to the ASTM D 256.

### (6) AC Breakdown Voltages

250 µm thick sheets were using an extruder for HAAKE Polylab quality control (QC) system. The AC breakdown voltage was measured in accordance with ASTM D 149.

**Table 1**

| | | Example | | | Comparative Example | | | | |
|---|---|---|---|---|---|---|---|---|---|
| | | 1 | 2 | 3 | 1 | 2 | 3 | 4 | 5 |
| Resin Features | Melt Index (g/10min) | 2.5 | 2 | 2.5 | 3 | 2.5 | 2.5 | 2 | 2 |
| | Composition of component (a) | | | | | | | | |
| | Propylene (wt%) | 100 | 98.1 | 99 | 100 | 100 | 100 | 99 | 100 |
| | Ethylene (wt%) | 0 | 1.9 | 1 | 0 | 0 | 0 | 1 | 0 |
| | Composition of component (b) | | | | | | | | |
| | Propylene (wt%) | 70 | 70 | 75 | | - | 60 | 75 | 55 |
| | Ethylene (wt%) | 30 | 30 | 25 | | - | 40 | 25 | 45 |
| | Amount of component (a) (wt%) | 55 | 70 | 60 | 100 | 100 | 85 | 85 | 70 |
| | Amount of component (b) (wt%) | 45 | 30 | 40 | 0 | 0 | 15 | 15 | 30 |
| | Dispersed phase size (µm) | 0.3 | 0.1 | 0.1 | - | - | 1.5 | 0.1 | 1.5 |
| | Thermal Behaviors | | | | | | | | |
| | Melting temperature (Tm) | | | | | | | | |
| | (°C) | 164 | 148 | 156 | 164 | 161 | 165 | 156 | 164 |
| | Crystallization temperature (Tc) | | | | | | | | |
| | (°C) | 122 | 111 | 119 | 124 | 112 | 123 | 120 | 117 |
| | Tm-Tc | 42 | 39 | 37 | 40 | 49 | 42 | 36 | 47 |
| Mechanical/Electrical Properties | Flexural modulus (kg/cm²) | 6500 | 5000 | 7000 | 17000 | 15000 | 13000 | 11000 | 8500 |
| | Room Temperature Izod (kgcm/cm) | NB¹⁾ | NB | NB | 4 | 4 | 11 | 15 | NB |
| | -20°C Izod (kgcm/cm) | 10 | 6 | 7 | 2 | 2 | 4 | 3 | 10 |
| | AC breakdown voltage (kV) | 31 | 36 | 35 | 32 | 32 | 25 | 24 | 20 |

| | | | | | | | | | |
|---|---|---|---|---|---|---|---|---|---|
| ¹⁾ NB: No Break | | | | | | | | | |

As confirmed from Table 1, the polypropylene according to the present invention exhibited a low flexural modulus representing flexibility and superb impact strength and AC breakdown strength. By contrast, in Comparative Examples 1 and 2, propylene homopolymers exhibited high flexural moduli, which is not desirable. Specifically, in Comparative Example 2, the difference (Tm-Tc) between the melting temperature (Tm) and the crystallization temperature (Tc) was greater than 45°C, suggesting that the breakdown strength was relatively low. In Comparative Examples 3 and 4, since the amounts of ethylene-propylene rubber copolymers were small, the flexibility and impact strength were low, which is not desirable. Specifically, in Comparative Example 3, since the size of the rubber dispersed phase was relatively large, the breakdown strength was undesirably lowered. In Comparative Example 5, the difference (Tm-Tc) between the melting temperature (Tm) and the crystallization temperature (Tc) was relatively large and the rubber dispersed phase was large, suggesting that the breakdown strength was relatively low, which is not desirable.

FIGS. 1 and 2 illustrate sizes of rubber dispersed phases. Specifically, FIG. 1 illustrates the size of a dispersed phase of the polypropylene resin according to the present invention. As shown in FIG. 1, the polypropylene resin according to the present invention has a finely and uniformly dispersed phase having the dispersed phase size of 0.5 µm or less. As shown in FIG. 2 for the resin prepared in Comparative Example, the dispersed phase size is greater than 0.5 µm. If the rubber is finely and uniformly dispersed, an interface is increased and interfacial energy is high, thereby lowering a breakdown possibility due to micro cracks generated at the interface between a continuous phase and a dispersed phase, where electrical properties are deteriorated under a high voltage, thereby ultimately improving insulating properties.

Therefore, the polypropylene resin according to the present invention has improved insulating properties.

While the present invention have been particularly shown and described with reference to exemplary embodiments thereof, it will be understood by those of ordinary skill in the art that various changes in form and details may be made therein without departing from the spirit and scope of the present invention as defined by the following claims.

## Claims

1. A power cable comprising a polypropylene resin in an insulating layer, which resin is an ethylene-propylene block copolymer prepared by polymerization of (a) propylene homopolymer or ethylene-propylene random copolymer, and (b) propylene rubber copolymer, wherein a difference (Tm-Tc) between a melting temperature (Tm) of the ethylene-propylene block copolymer and a crystallization temperature (Tc) is 45°C or less, the size of the rubber copolymer in a dispersed phase is 0.5 µm or less, and the ethylene-propylene rubber copolymer (b) is contained in an amount of 30∼50 wt% based on the total weight of the ethylene-propylene block copolymer.

2. The power cable of claim 1, wherein the melting temperature (Tm) of the ethylene-propylene block copolymer is in the range of between 145°C and 165°C.

3. The power cable of claim 1, wherein ethylene is contained in an amount of 2 wt% or less based on the total weight of the ethylene-propylene random copolymer.

4. The power cable of claim 1, wherein the propylene homopolymer or ethylene-propylene random copolymer (a) is contained in an amount of 50 to 70 wt% based on the total weight of the ethylene-propylene block copolymer.

5. The power cable of claim 1, wherein ethylene is contained in an amount of 20 to 40 wt% based on the total weight of the ethylene-propylene rubber copolymer (b).

## Patentansprüche

1. Stromkabel, umfassend ein Polypropylenharz in einer Isolierschicht, wobei es sich bei dem Harz um ein Ethylen-Propylen-Blockcopolymer handelt, das durch Polymerisation (a) eines Propylen-Homopolymers oder eines statistischen Ethylen-Propylen-Copolymers und (b) eines Propylen-Kautschuk-Copolymers hergestellt wird, wobei eine Differenz (Tm-Tc) zwischen einer Schmelztemperatur (Tm) des Ethylen-Propylen-Blockcopolymers und einer Kristallisationstemperatur (Tc) 45°C oder weniger beträgt, die Größe des Kautschuk-Copolymers in einer dispergierten Phase 0,5 µm oder weniger beträgt und das Ethylen-Propylen-Kautschuk-Copolymer (b) in einer Menge von 30∼50 Gew.-%, bezogen auf das Gesamtgewicht des Ethylen-Propylen-Blockcopolymers, enthalten ist.

2. Stromkabel nach Anspruch 1, wobei die Schmelztemperatur (Tm) des Ethylen-Propylen-Blockcopolymers im Bereich zwischen 145°C und 165°C liegt.

3. Stromkabel nach Anspruch 1, wobei Ethylen in einer Menge von 2 Gew.-% oder weniger, bezogen auf das Gesamtgewicht des statistischen Ethylen-Propylen-Copolymers, enthalten ist.

4. Stromkabel nach Anspruch 1, wobei das Propylen-Homopolymer oder das statistische Ethylen-Propylen-Copolymer (a) in einer Menge von 50 bis 70 Gew.-%, bezogen auf das Gesamtgewicht des Ethylen-Propylen-Blockcopolymers, enthalten ist.

5. Stromkabel nach Anspruch 1, wobei Ethylen in einer Menge von 20 bis 40 Gew.-%, bezogen auf das Gesamtgewicht des Ethylen-Propylen-Kautschuk-Copolymers (b), enthalten ist.

## Revendications

1. Câble d'alimentation comprenant une résine de polypropylène dans une couche isolante, laquelle résine est un copolymère séquencé d'éthylène-propylène préparé par polymérisation (a) d'un homopolymère de propylène ou d'un copolymère statistique d'éthylène-propylène, et (b) d'un copolymère de caoutchouc de propylène, dans lequel une différence (Tm-Tc) entre une température de fusion (Tm) du copolymère séquencé d'éthylène-propylène et une température de cristallisation (Tc) est égale ou inférieure à 45°C, la taille du copolymère de caoutchouc dans une phase dispersée est de 0,5 µm ou moins, et le copolymère de caoutchouc d'éthylène-propylène (b) est contenu en une quantité de 30 à 50 % en poids sur la base du poids total du copolymère séquencé d'éthylène-propylène.

2. Câble d'alimentation selon la revendication 1, dans lequel la température de fusion (Tm) du copolymère séquencé d'éthylène-propylène est dans la plage de 145°C à 165°C.

3. Câble d'alimentation selon la revendication 1, dans lequel l'éthylène est contenu en une quantité de 2 % en poids ou moins sur la base du poids total du copolymère statistique d'éthylène-propylène.

4. Câble d'alimentation selon la revendication 1, dans lequel l'homopolymère de propylène ou le copolymère statistique d'éthylène-propylène (a) est contenu en une quantité de 50 à 70 % en poids sur la base du poids total du copolymère séquencé d'éthylène-propylène.

5. Câble d'alimentation selon la revendication 1, dans lequel l'éthylène est contenu en une quantité de 20 à 40 % en poids sur la base du poids total du copolymère de caoutchouc d'éthylène-propylène (b).
